# EUROPEAN PATENT APPLICATION

(11) **EP 1 911 781 A1**
(43) Date of publication of application: **16.04.2008**
(21) Application number: 06021417.8
(22) Date of filing: 12.10.2006
(51) Int. Cl.: C08G 18/36, C08G 18/42, C08G 18/10

(54) **Oil absorbing foam**

(71) Applicant: ARIZONA CHEMICAL COMPANY, Jacksonville, FL 32246-8225 (US)
(72) Inventor: Clarke, James W., Huizen 1271 CS (NL); Bordado, Joao Carlos Moura, 1000-267 Lisboa (PT); Correia, Cristina Sofia Rebelo Borges, 3800-003 Aveiro (PT); Correia, Nuno Davide Sobral, 3800-003 Aveiro (PT)
(74) Representative: Schneider, Michael

(57) **Abstract**

The present invention pertains to an absorbent material structure for absorbing oil-like liquids and a manufacturing process for such material structure. The invention indicates an advantageous use of the material structure and provides an absorbent material to be primarily used in the absorption of hydrocarbon oil, crude oil and motor oil. The absorbent material structure according to the present invention is an open-cell and highly hydrophobic polyurethane foam. Among other uses, this polyurethane foam can be applied to recover petroleum from a floating slick or spill or to control the oil leaks in boat marinas by absorbing continuously the residues that usually exist in the water surface.

## Description

### Field of the invention

The present invention provides a novel type of polyurethane foam whose molecular structure is especially designed for oil absorption.

### Background of the invention

Polyurethanes are versatile materials that can be used in a wide range of applications such as foam insulation, adhesives, coatings, car seats and mattresses. Polyurethanes can assume different forms such as elastomers or microcellular foams. The latter have been used for energy absorbing bumper mountings and auxiliary suspension units for wheels and especially in shoe soles.

The cleaning of the sea or river water after an oil spill has always been of major importance when these accidents happen. The small quantities of oil and gasoline that accumulate in the boat marinas also constitute a serious environmental problem.

There are already some solutions that act as oil sorption materials but the majority is either a complex system or the material they are made of is not easily biodegradable.

### Review of the prior art

WO 03/070801 is directed to a microcellular polyurethane foam, derived from dimer fatty acids and adipic acid, to be used in shoe soles.

JP 52044784 refers to the attainment of a selective oil absorbent by dipping flexible polyurethane foam in a solution containing silicone oil.

US 3650406A is directed to a system for collecting and retrieving a liquid of low density from the surface of a body of liquid of higher density.

US 3679058A is directed to a resilient depressible oil collection boom for collection and removal of oil from the surface of a fluid reservoir.

US 4876011A refers to an apparatus for skimming oil from the surface of liquid.

US 5387053A is directed to a spill control apparatus for use on offshore oil well drilling platforms comprising an adsorbent material that is an organic industrial absorbent.

US 5700558A refers to a biodegradable absorbent material for oil or other hydrocarbon liquid spills, the material consisting of a mixture of granulated foam, microbial nutrient, de-dust agent and ground cellulosic material.

US 5885451A is directed to an apparatus for containment and recovery of water-insoluble liquids floating on water comprising a fibrous absorbent having an outer covering of a fibrous absorbent hydrophobic material.

US 5423991A describes an apparatus or mechanism and a method of using it to recover petroleum from a floating slick or spill by absorbing the petroleum in powder particles principally comprising a reaction product of polyurethane, a catalyst, and a strong cationic polymer.

US 3888766A refers to oil sorption materials impregnated with a hydrophobic and oleophilic sealant for use in absorbing oil and like pollutants from the surfaces of either solids or liquids. The oil sorption material is preferably a sheet of polyurethane foam with a solution of latex or a sealant.

WO 9857675A1 describes an absorbent material structure for absorbing liquids and a manufacturing method for such a material structure. The absorbent material structure according to the invention has the form of an open-cell, flexible foam with ionic groups that have been created in the material structure.

GB 1389864A is directed to a water wettable open cell rigid polyurethane foam.

US 5,852,064 relates to a hydrophobic foam which is the reaction product of a resol and a cross-linking agent made of linear and/or cyclic, partially or completely sulphonated, phenolic oligomers, which foam is capable to absorb hydrocarbons and other substances in amounts up to 72 times its own weight.

An object of the present invention is to provide a novel type of polyurethane foam whose molecular structure is especially designed for oil absorption.

It is a further object of the present invention to provide a process for the manufacture of a polyurethane foam based on a fatty acid polyester polyol structure tailored to have a great affinity with oil.

These objects are achieved by an open-cell and highly hydrophobic polyurethane foam as defined in present independent claims 1 and 2 and by a process for preparing such polyurethane foam as defined in present independent claim 21.

These and other objects and features of the invention will be apparent from the description and claims which follow.

Further advantageous and/or preferred embodiments of the invention are subject-matter of the respective subclaims.

The inventive open-cell and highly hydrophobic polyurethane foam specially for oil absorption comprises a polyurethane represented by the following general formula: 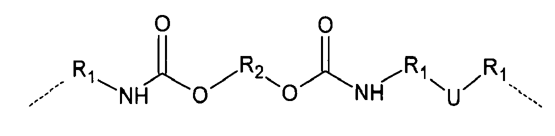 where
R₁ is the residue of an at least bifunctional isocyanate,
R₂ is the residue of a fatty acid polyester polyol represented by the following general formula: 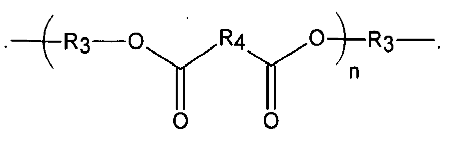 where
R₃ is the residue of an at least bifunctional alcohol,
R₄ is the residue of an at least bifunctional fatty acid,
n is an integer from 1 to 30, and
U is

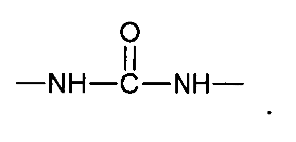

It should ne noted »U« is formed by a second reaction that is responsible for the foaming in manufacture of polyurethane foams as it conducts to the formation of carbon dioxide with simultaneous formation of substituted urea groups. The amine mentioned below reacts with additional isocyanate to form a di-substituted urea that will also be part of the foam structure.

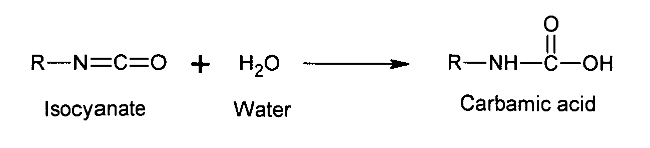

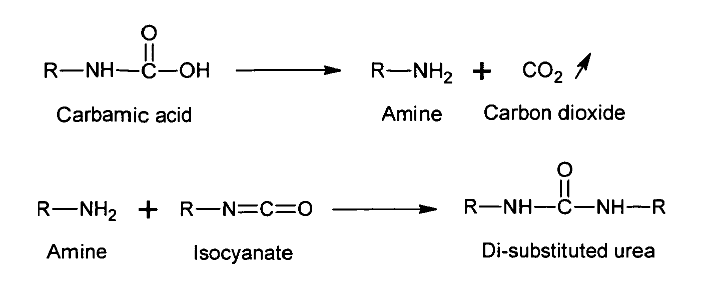

Thus, the general structure defined above is in fact a poly(urethane-urea) and these two groups are repeated in the structure randomly, depending on the course of the reaction, but this is of no particular relevance for the teaching of the present invention.

There are also some further reactions which should be noted, however, only for proving some chemical background and not intended for limiting the present invention.

Isocyanates can also react with carboxylic acids (that may be present in polyester polyols, for example). The reaction starts with the formation of a mixed anhydride followed by decomposition, yielding the corresponding amide and liberating carbon dioxide:

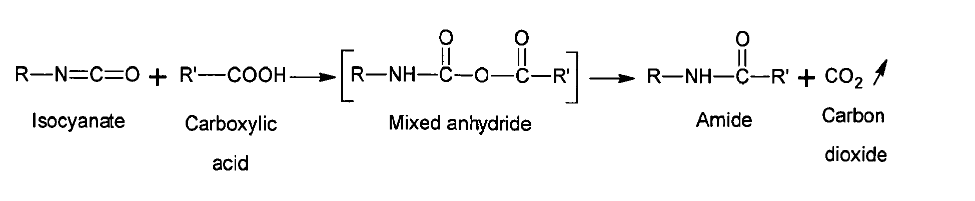

Beyond all the reactions described above, several crosslinking reactions may occur. At elevated temperatures (higher than 100 °C) or at lower temperatures but in the presence of some catalysts, urethane groups can react with isocyanate groups to form allophanate linkages:

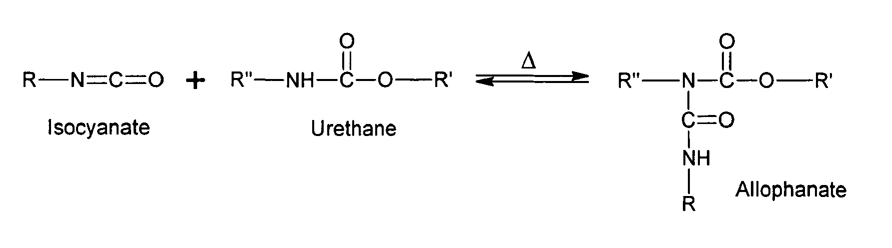

Similarly, the urea groups may react with isocyanate groups, yielding biuret linkages:

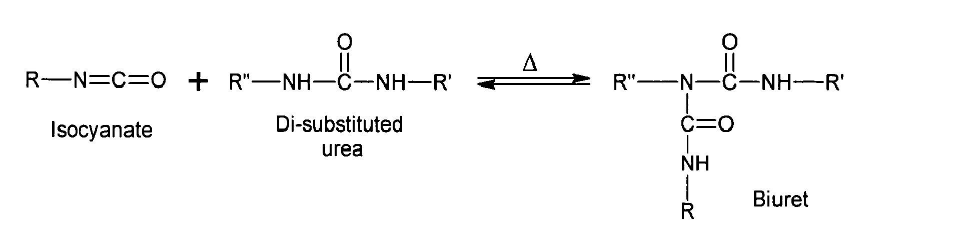

Trimer formation can also occur by the reaction of 3 groups isocyanate leading to isocyanurate rings.

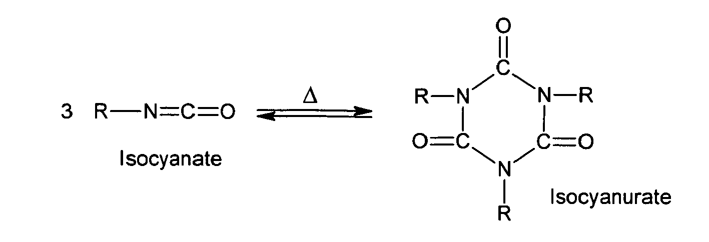

In addition to the residue of fatty acid polyester polyols, R2 in the above general formula of the polyurethane of the inventive foams may also be the residue of a polyether polyol represented by the following general formulas:

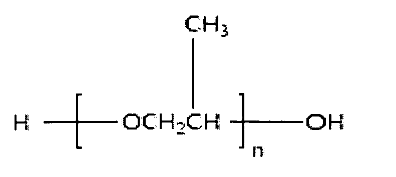

Polyether from propylene oxide
or

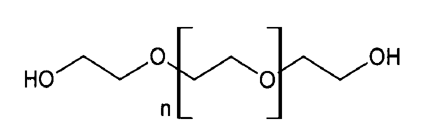

Polyether from ethylene oxide
where n is such that the molecular weight of the resulting polyether polyol is in the range of from 100 to 15.000 g/mol.

The polyether polyol may also be a random polymer prepared from polymerization of a mixture of ethylene and propylene oxide.

Due to its high hydrophobicity the inventive polyurethane foam absorbent material is especially indicated for oil absorption in floating slicks or spills or for continuous absorption of oil-like residues in boat marinas. A further advantage is the great volume holding of the inventive polyurethane foam. Moreover, the mechanical properties are better so that the foams can experience various types of abrasion and crushing without desintegrating. It does not go to pieces when in contact with water, for example in a river, marina, bay or shipping canal (and can thus be used in a preventive way), the oil can be easily recovered from the foam (e.g. by compression), and the foam can be re-used without loosing significantly the original structure, is more flexible, and is easily biodegradable.

The inventive polyurethane foams have a density of 5 to 40 kg/m³, for example of 10 to 35 kg/m³, and optimally of 20 to 30 kg/m³, a high open cell content of above 80 %, for example above 95 %, and optimally above 98%, and a small average cell diameter of 0.01 mm to 5 mm, for example 0.1 to 1.5 mm, optimally around 1 mm.

The inventive polyurethane foams absorb a much higher quantity of oil per m³ of foam whereas they increase their weight much lesser than known commercial foams such as Black Green® (phenolic resin based foam produced by CAL-X Group, Geneva, Switzerland).

An oil wettable open cell polyurethane foam according to the invention possesses the ability of absorbing oil in a quantity that is at least 10 times its weight when immersed in a mixture water/oil for 5 min, and the maximum quantity of water absorbed is no more than 10% of the initial weight of the absorbent material, preferably no more than 5%.

The oil absorbing capacity (weight of absorbed oil per volume of foam) of the inventive polyurethane foams is at least 500, at least 600, at least 750 or even at least 900 kg/m³.

The high compatibility of the polyurethane foam with oil-like products comes upon the highly aliphatic structure of fatty acids that are present in the polyester polyol used.

In the following the invention is disclosed in more detail with reference to examples. However, the described specific forms or preferred embodiments are to be considered in all respects as illustrative and not restrictive, the scope of the invention being indicated by the appended claims rather than by the following description, and all changes which come within the meaning and range of equivalency of the claims are therefore intended to be imbraced therein.

### Detailed description of the invention

The synthesised polyurethane foams have an open cell structure and are highly hydrophobic, and were prepared through the reaction between fatty acid polyester polyols, water and at least bifunctional isocyanates in a mixture optionally comprising also surfactant agent(s), catalyst(s) and reducing viscosity agent(s). It is possible to use mixtures of different fatty acid polyester polyols and at least bifunctional isocyanates (it is appreciated that the term »at least bifunctional« means 2 or more reactive isocyanate groups).

In one embodiment of the present invention an oil absorbing polyurethane foam may be, for example, prepared in six stages:
1. The preparation of the formulated fatty acid polyester polyol consisting in the mixture of the fatty acid polyester polyol, water, and optionally surfactant agent(s), catalyst(s) and viscosity reducing agent(s) and subsequent homogenization.
2. The reaction with the at least bifunctional isocyanate by mixing it with the formulated fatty acid polyester polyol.
3. The act of pouring it into the mould.
4. The curing process.
5. The demolding process.
6. The crushing of the foam to increase the open-cell content.

The above mentioned stages 1 and 2 may also be performed at the same time in an adequate mixer.

During the reactional stage two main reactions happen: the one between the fatty acid polyester polyol and the at least bifunctional isocyanate responsible for the formation of the polyurethane and the one between water and the at least bifunctional isocyanate responsible for the formation of the carbon dioxide that acts as blowing agent during froth expansion as the foam sets.

After the mixture between the formulated fatty acid polyester polyol and the at least bifunctional isocyanate the product is poured into a mould where it's allowed to grow freely and without space constraints. The demolding is carried out around 24 h or later after the synthesis and the resultant foam is then crushed in a foam crusher to maximize the open cell content.

For example, the fatty acid polyester polyols used can have molecular weights in the range of 500 to 6.000 g/mol, for example 600 to 5.000 g/mol, preferably 700 to 1.500 g/mol and hydroxyl functionalities between 2 and 5, preferably between 2 and 3, and the fatty acid polyester polyols are hydroxyl terminated. However, there are no particular limitations regarding molecular weight and hydroxyl functionality.

The polyester polyols may be prepared by any suitable esterification reaction known in the art or may be commercially available products such as Diexter G 214 (trade name) from Coim S.p.A, Milan, Italy.

Any at least bifunctional fatty acid (it is appreciated that the term »at least bifunctional« means 2 or more reactive carboxylic acid groups) may be used for preparing the fatty acid polyester polyols used in the present invention. Of course, the particular at least bifunctional fatty acid selected will generally depend on the suitable fatty acid polyester polyol for the ultimate polyurethane desired.

At least bifunctional, e.g. dicarboxylic, fatty acids useful in the present invention include any at least bifunctional carboxylic acid in which the carboxylic acid groups are separated by a bivalent hydrocarbon group which may be saturated or unsaturated, aliphatic, aromatic or cycloaliphatic and which may have one or more aliphatic, aromatic or cycloaliphatic substituents. Corresponding acid anhydrides, esters, and acid chlorides of the foregoing acids are also suitable for use in the present invention and are encompassed by the term »at least bifunctional fatty acid«.

Non-limiting examples for suitable dicarboxylic fatty acids are C₁₂, C₁₄, C₁₆, C₁₈, C₂₀, C₂₁, C₂₂, C₂₄, C₂₆, C₂₈, C₃₀, C₃₂, C₃₄, C₃₆, C₃₈, C₄₀, C₄₂, C₄₄, C₄₆, C₄₈, C₅₀, C₅₂ and C₅₄ dicarboxylic acids, including any isomeric forms. It should be noted in this context that not the specific structure is important, but that the resulting final polyurethane foam has a sufficient hydrophobicity to result in the above-mentioned superior good oil absorbing capacities.

Some specific examples are C₁₂ dodecanedioic acid, C₁₃ brassylic acid, C₁₉ tetradecanedioic acid, C₁₅ pentadecanedioic acid, C₁₆ hexadecanedioic acid and C₁₈ octadecanedioic acid.

Polymerized fatty acids are suitable for use as the at least bifunctional, e.g. difunctional, fatty acid in the present invention. The term »polymerized fatty acid« is intended to include any acid obtained by polymerizing, e.g. dimerizing or trimerizing, any saturated, ethylenically unsaturated or acetylenically unsaturated naturally occurring or synthetic monobasic aliphatic carboxylic acid containing as many as 54 or more carbon atoms. Polymerized fatty acids are a well known material of commerce, typically formed by heating long-chain unsaturated fatty acids, usually monocarboxylic acids, to about 200-250 °C in the presence of a clay catalyst in order that the fatty acids polymerize. The product typically comprises dimer acid, isomeric dimers, such as dicarboxylic acid formed by dimerization of the fatty acid, and trimer acid, such as tricarboxylic acid formed by trimerization of the fatty acid, and higher polymers. The polymerized fatty acid useful in this invention may be a liquid with an acid number of about 180-200. It may be hydrogenated or non-hydrogenated.

For the commonly occurring unsaturated C₁₈ monocarboxylic fatty acids, polymerization will generally produce C₃₆ dicarboxylic acids and C₅₄ tricarboxylic acids (as well as some unreacted C₁₈ monocarboxylic acids). A common source of such species, can be found, for example, in tall oil fatty acids.

Typical C₃₆ dicarboxylic fatty acids produced from dimerization of unsaturated C₁₈ monocarboxylic fatty acids from tall oil as contained in Unidyme® 14 or Unidyme® 18 of Arizona Chemical Company (containing dimerized C₁₈ fatty acids from tall oil in differing contents) have, for example, the following structures: 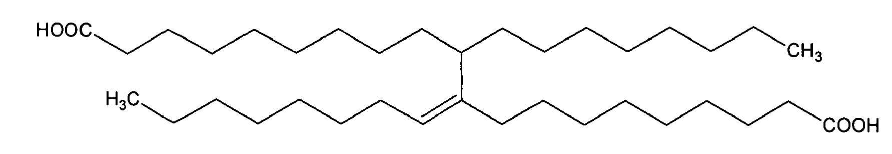 or

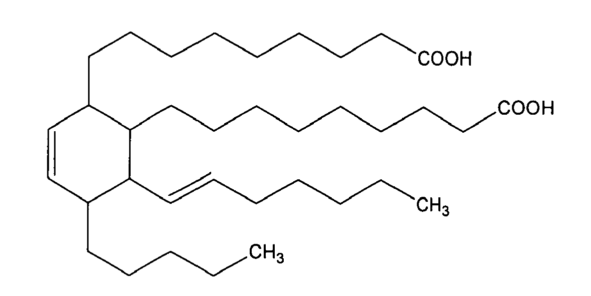

It is appreciated that the carbon atom content and general structure will vary somewhat depending on the carbon chain lengh and the position of the double bond(s) in the monomeric fatty acid used for dimerization.

In a preferred embodiment of the invention, a dicarboxylic fatty acid mixture is used, which may comprise polymerized fatty acids, such as dimers or trimers, and optionally additional short-chain (with 1 to 11 carbon atoms) dicarboxylic acids described as follows. In one preferred embodiment, suitable additional short-chain dicarboxylic acids include oxalic, glutaric, malonic, adipic, succinic, suberic, sebacic, azelaic, dodecanedioic, pimelic, terephthalic, isophthalic, phthalic, naphthalene dicarboxylic acids and 1,4- or 1,3-cyclohexane dicarboxylic acids. In another preferred embodiment, suitable additional short-chain dicarboxylic acids include 1,6- hexanedioic acid (adipic acid), 1,7-heptanedioic acid (pimelic acid), 1,8- octanedioic acid (suberic acid), 1,9-nonanedioic acid (azelaic acid), or 1,10-decanedioic acid (sebacic acid).

In some non-limiting embodiments, the additional short-chain dicarboxylic acids comprise at most 20 % by weight of the total dicarboxylic acids. For example 10 % by weight of the total dicarboxylic acids optionally can be dicarboxylic acids with less than 12 carbon atoms.

Polymerized fatty acid may contain large amounts of trimer acid, for example 15-20% trimer acid in dimer acid after first distillation, or smaller amounts in the range of 4-6% of trimer acid in dimer acid after second destillation. Either can be used effectively. The trade-off of using one time distilled polymerized fatty acids is preferred due to its lower cost. The added functionality from the additional trimer acids can be controlled by also adding the necessary amount of a hydroxy substituted carboxylic acid, or a monoacid such as stearic acid or tall oil fatty acids.

The origin of the fatty acids used also can be a natural one, e.g. from tall oil (tall oil fatty acids - TOFA) or from rapeseed oil. Fatty acids with different vegetable origins can also be used. Further, the fatty acids used can be mixtures of saturated and unsaturated fatty acids, which unsaturated fatty acids may have one or more double bonds.

Any at least bifunctional alcohol (it is appreciated that the term »at least bifunctional« means 2 or more reactive hydroxyl groups) may be used for preparing the fatty acid polyester polyols used in the invention. Non-limiting examples are dialcohols or glycols with 2 to 6 carbon atoms, preferably selected among the following: 1,2-ethanediol, 1,2-propanediol, 1,3-propanediol, 1,2-butanediol, 1,3-butanediol, 1,4-butanediol, 2,2-dimethyl-1,3-propanediol, 1,6-hexanediol, 2-methyl-2,4-pentanediol, 3-methyl-2,4-pentanediol, 2-ethyl-1,3-hexanediol, 2,2,4-trimethyl-1,3-pentanediol, diethylene glycol, triethylene glycol, polyethyleneglycols, dipropylene glycols, tripropylene glycols, polypropylene glycols, and 2,2-bis(4-hydroxycycylohexyl) propane.

It is appreciated that the above defined general structure of the residue of a fatty acid polyester polyol R₂ in the final polyurethane can also be obtained by using respective long-chain at least bifunctional alcohols, e.g. diols or glycols, for the residue R₃ and respective short-chain at least bifunctional carboxylic acids, e.g. dicarboxylic acids, for the residue R₄. For example, C₃₆ dimer fatty acid can be reduced by any suitable and known reaction to give C₃₆ dimer (fatty) diol or glycol.

Of course, the above mentioned non-limiting examples for suitable dicarboxylic fatty acids, namely C₁₂, C₁₄, C₁₆, C₁₈, C₂₀, C₂₁, C₂₂, C₂₄, C₂₆, C₂₈, C₃₀, C₃₂, C₃₄, C₃₆, C₃₈, C₄₀, C₄₂, C₄₄, C₄₆, C₄₈, C₅₀, C₅₂ and C₅₄ dicarboxylic acids, including any isomeric forms, may be replaced by the respective diols obtained be suitable reduction. As already noted not the specific structure is important, but that the resulting final polyurethane foam has a sufficient hydrophobicity to result in the above-mentioned superior good oil absorbing capacities.

Any at least bifunctional isocyanate (it is appreciated that the term »at least bifunctional« means 2 or more reactive isocyanate groups) may be used in the preparation of the inventive polyurethane foams, for examples aliphatic, cycloaliphatic and aromatic ones. Non-limiting examples are diisocyanates preferably selected among the following: ethylene diisocyanate, tetramethylene-1,4-diisocyanate, hexamethylene-1,6-diisocyanate, dodecane-1,1 2-diisocyanate, cyclobutane-1,3-diisocyanate, cyclohexane-1,3- or 1,4- diisocyanate, 1-isocyanato-3,3,5-trimethyl-5-isocyanatomethylcyclohexane, hexahydrotolylene-2,4- or 2,6-diisocyanate, hexahydrophenylene-1,3- or - 1,4-diisocyanate, perhydrodiphenylmethane-2,4'- or 4,4'-diisocyanate, phenylene-1,3- or -1,4-diisocyanate, tolulene-2,4- or -2,6-diisocyanate, diphenylmethane-2,4- or -4,4'-diisocyanate (MDI) or polymeric forms of MDI, naphthylene-1,5-diisocyanate, triphenyl methane-4,4',4"-triisocyanate, polyphenyl- polymethylene polyisocyanate, m- or p-isocyanatophenyl sulphonyl isocyanate, perchlorinated aryl polyisocyanate, polyisocyanate containing carbodiimide groups, toluene-2,4- or -2,6-diisocyanate, polyphenyl polymethylene polyisocyanate or isophorone diisocyanate.

Any surfactant(s) can be used in the preparation of the inventive polyurethane foams, for example, organosilicon surface active agents (such as simple silicone oils, e.g. polydimethylsiloxane (PDMS), with no pendant side chains, or more complex polysiloxanes or polyoxyalkylene polysiloxane copolymers with diverse levels of pendant side chains), diethanolamide of fatty residue, a fatty alcohol ethoxylate or sorbitol mono esterified with a fatty acid with 8 to 28 carbon atoms.

Non-limiting examples for organosilicon surface active agents have the following structures: 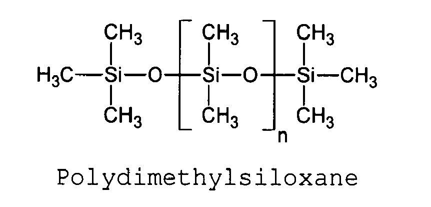 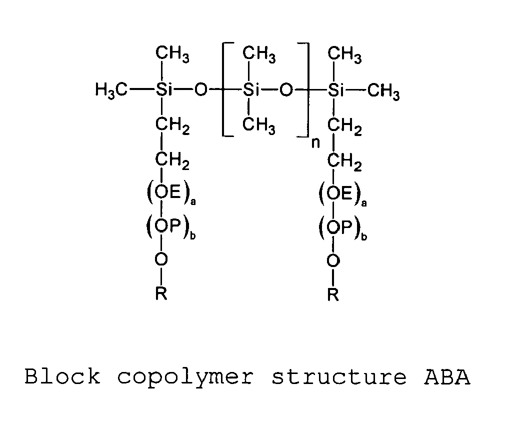 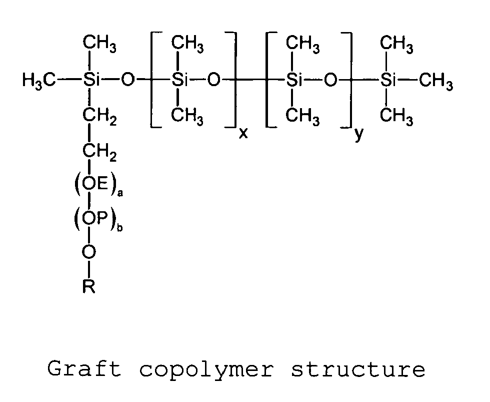 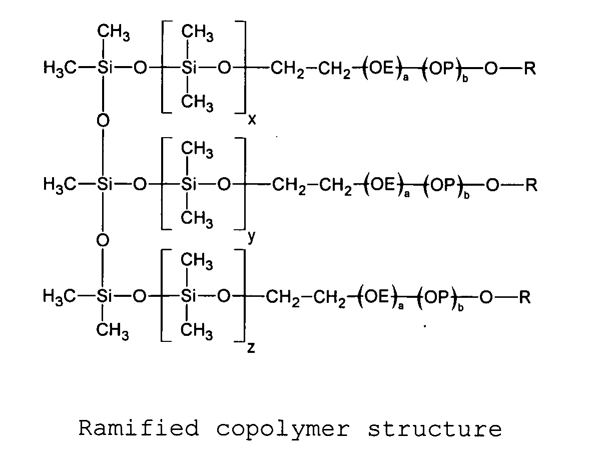 where
OE is a polyoxyethylene group
OP is a polyoxypropylene group
R means either a hydrogen atom or a methyl group

Source: Hill, R.M. (ed). 1999, "Silicone Surfactants", Vol. 86, Marcel Dekker, New York.

The above standard book describes further suitable organosilicon surface active agents for use in the invention which are incorporated by reference herein.

The surfactant(s) can be used to tailor some physical properties of the inventive polyurethane foams according to practical needs. For example, to increase the open cell content of the polyurethane foam a low activity silicon surfactant may be used, and to decrease the cell size of the foam a high activity silicon surfactant may be used.

Any catalyst(s) can be used in the preparation of the inventive polyurethane foams, for example organic compounds such as tertiary amines, for example N,N-dimethylethanolamine (DMEA) ; N,N-dimethylcyclohexylamine (DMCHA); bis(N,N-dimethylaminoethyl)ether (BDMAEE); N,N,N',N',N"-pentamethyldiethylenetriamine (PMDETA); 1,4-diazabicyclo[2.2.2]octane (DABCO) (also referred to as triethylenediamine (TEDA)); 2-(2-dimethylaminoethoxy)-ethanol (DMAEE); 2-((2-dimethylaminoethoxy)-ethyl methyl-amino)ethanol; 1-(bis(3-dimethylamino)-propyl)amino-2-propanol (also referred to as N"-hydroxypropyl-N,N,N',N'-tetramethyliminobispropylamine); N,N',N" tris(3-dimethylamino-propyl)hexahydrotriazine; dimorpholinodiethylether (DMDEE); N,N-dimethylbenzylamine; N,N,N',N",N"-pentamethyldipropylenetriamine; N,N'-diethylpiperazine, organometallic compounds such as stannous octoate; dibutyltin dilaurate (DBTDL or DBTL); dibutyltin mercaptide; phenylmercuric propionate; lead octoate; potassium acetate/octoate (KA/KO); quarternary ammonium formates (QAF); ferric acetylacetonate, or mixtures of catalysts from both groups. A mixture of DABCO/DBTL (even with DBTL in a very small quantity) shows a synergistic effect and is thus preferably used. K. Frisch, Fundamental chemistry and catalysis of polyurethanes, in Polyurethane technology, P. Brunis, Editor. 1969, John Wiley & Sons: New York, discusses the above-mentioned synergistic effect. The above book describes further suitable catalysts for use in the invention which are incorporated by reference herein.

Any viscosity reducing agent can be used in the preparation of the inventive polyurethane foams, which decreases the viscosity of the mixture if this is necessary for processing purposes. Plasticizers such as phthalate esters, for example, dioctyl phthalate, diisobutyl phthalate, dinonyl phthalate, diisononylphthalate, didecyl phthalate and diisodecyl phthalate, adipate esters or any other type of polymeric plasticers, epoxidised soyabean oil, fatty acid esters (such as FAME (M for methyl)), dimerised fatty acid esters (such as Uniflex 102E) can be used as well as any other compound inert to the mixture that imparts a significative reducing effect in the viscosity of the mixture. With a plasticizer the foam flexibility may be tailored according to practical needs.

The preparation of oil absorbing polyurethane foams according to the invention is illustrated by the following non-limiting experiments and examples.

### Experiments and Examples

### Procedure to determine the oil absorption of polyurethane foams

1. Cut 4 small cubes of foam.
2. Crush them by applying a mechanical force in order to open all the cells that may be closed.
3. Weigh the 4 cubes (all together). The total weight should be approximately 0.5 to 1.0 g.
4. Put water and mineral oil (oil in an amount sufficient to cover the entire surface of the water) in a 25 cm wide transparent cup.
5. Put the foam cubes in contact with the mixture and turn on the chronometer.
6. Mix gently with a glass stirrer.
7. From t=20s to t=5 min, mix it with time gaps of approx 1 min.
8. Leave for 6 min (until t=11 min).
9. When t=11 min, take the foam cubes from the water/oil mixture, take out the excess of oil and weigh them.
10. Calculate the quantity of absorbed oil (in kg) by m³ of foam (using the specific gravity of the foam - see below).

### Procedure to determine the specific gravity of polyurethane foams

### a) Laboratorial scale

1. Using a cylindrical sharp metallic cutter (diameter = 4.5 cm, height = 5 cm), cut 3 cylindrical pieces from the central part of the foam.
2. Measure 5 times the diameter of each foam cylinder and calculate the average.
3. Measure 5 times the height of each foam cylinder and calculate the average.
4. Weigh 5 times each foam cylinder and calculate the average.
5. Using the values obtained in 2-4 calculate the foam specific gravity in kg/m³.

### b) Industrial Scale

At industrial scale there is usually a highly precise foam cutting equipment that is prepared to cut cubes with determined dimensions. The cubes are then weighed and the foam specific gravity calculated.

Note: For the procedures described above, do not use either the foam skin or the foam near it.

The reactional conditions for all the syntheses were similar: temperature between 20 and 25 °C, mixing rate 1.500 rpm, time of mixing to prepare the formulated fatty acid polyester polyol (a mixture of the fatty acid polyester polyol, water, and optionally surfactant agent(s), catalyst(s) and viscosity reducing agent(s)): 30 s, time of mixing the formulated fatty acid polyester polyol with the at least bifunctional isocyanate: 20 s.

The reaction vessel and the mould are made of polypropylene, but there are no particular limitations regarding the reaction vessel and mould materials.

The performance testing consisted in dipping the inventive polyurethane foam in a mixture of water/mineral oil for 11 min and then comparing the final and the initial weights of the foam.

### General formulation

100 parts of fatty acid polyester polyol
0.30 parts of catalyst (DABCO/DBTL)
5-7 parts water, for example 6 parts water
1 part of silicon surfactant
0 or 10% (w/w) of plasticizer (dioctylphtalate, DOP)
MDI (isocyanate index of 105) (5% excess)

### Example 1

The reaction vessel was charged with 100 parts (weight) of U14EG12*, 6 parts of water, 0.15 parts of DABCO (see above definition), 0.15 parts of DBTL (see above definition) and 1 part of an organosilicon surfactant. This mixture was agitated during 30 s at 1.500 rpm.

Then 151 parts of crude MDI (see above definition) were added and the whole mixture was agitated during 20 s and then poured into the mould. Twenty-four hours later the foam was demoulded.

The foam initial weight was measured, and the foam was put in contact with the mixture water/oil for 11 min after which the foam final weight was measured.

### Example 2

The reaction vessel was charged with 100 parts (weight) of U14EG12*, 6 parts of water, 0.15 parts of DABCO, 0.15 parts of DBTL and 1 part of an organosilicon surfactant. This mixture was agitated during 30 s at 1.500 rpm.

Then 151 parts of crude MDI were added and the whole mixture was agitated during 20 s and then poured into the mould. Twenty-four hours later the foam was demoulded and crushed in a foam crusher. For crushing any known polyurethane crusher can be used. Crushing can be performed by putting the foam between two plates, for example made of a suitable metal, and then applying a mechanical force for approaching the plates. An example for a suitable commercial foam crusher is the Model FC-100 from Edge-Sweets Company, Grand Rapids, USA with a lower and upper carriage each containing powered rollers for crushing with a crushing force of 6.800 kg and a roll speed in the range of 3 to 7.6 m/min, for example, of faster than 5 m/min. The crushing conditions are such that the foam is not completely destroyed and that the already contained open cell content is maintained, but that just the bubbles generated by the carbon dioxide will be opened to increase the open cell content accordingly.

The initial weight was measured and the foam was put in contact with the mixture water/oil for 11 min after which the final weight of the foam was measured.

The results of weight increase of the examples 1 and 2 are presented in the following table.

| Example nr | Oil absorption (kg of oil per m³ of foam) |
|---|---|
| 1 | 409 |
| 2 | 707 |

The fatty acid polyester polyols used for the preparation of the following examples for oil absorbing polyurethane foams have been produced from Unidyme® 14 or Unidyme® 18 of Arizona Chemical Company (C₃₆ dicarboxylic fatty acids from tall oil in differing contents) and ethylene glycol in 1 : 2 molar ratio, with average molecular weights of 700 to 1.500 g/mol, with viscosities (at 25 ± 1°C) in the range 100 to 200 poise and average hydroxyl functionality of approximately 2.

The polyurethane foam formulations are usually defined reporting some of the reagent quantities to 100 weight parts of polyol (php).

### Example 3

100 g of U14EG12*
5.90 g of water (that corresponds to 6 parts of water php)
0.15 g of DABCO 33LV** (that corresponds to 0.05 php)
0.25 g of DBTL (that corresponds to 0.25 php)
150.81 g of crude MDI*** (isocyanate index 105)
1.0 g of Tegostab B-1048 (silicon surfactant from Degussa)
No DOP was used

This foam was capable of absorbing 923 kg of oil / m³ of foam.

### Example 4

100 g of U18EG12*
7 g of water (that corresponds to 7 parts of water php)
0.61 g of DABCO 33LV** (that corresponds to 0.20 php)
0.10 g of DBTL (that corresponds to 0.10 php)
137.13 g of crude MDI*** (isocyanate index 105)
1.0 g of Tegostab B-1048 (silicon surfactant from Degussa)
10% (w/w) of DOP

This foam was capable of absorbing 907 kg of oil / m³ of foam.
* A polyester polyol prepared by reacting dimerized C₁₈ fatty acids from tall oil (Unidyme® 14 or 18 of Arizona Chemical Company) with ethylene glycol in 1 : 2 molar ratio at 240 °C and atmospheric pressure till acid value is below 1 mgKOH/g sample resulting in a polymer with molecular weight of 700 g/mol nominal, averaging from 700 to 1.500 g/mol
** DABCO 33LV is a commercial designation to define DABCO with 67% (w/w of total mixture) of dipropylene glycol.
*** »crude MDI« means a type of polymeric MDI with functionality around 2.8.

Examples 3 and 4 are particularly good performing oil absorbing polyurethane foams.

Summing up, the present invention pertains to an absorbent material structure for absorbing oil-like liquids and a manufacturing process for such material structure. The invention indicates an advantageous use of the material structure and provides an absorbent material to be primarily used in the absorption of hydrocarbon oil, crude oil and motor oil. The absorbent material structure according to the present invention is an open-cell and highly hydrophobic polyurethane foam. Among other uses, this polyurethane foam can be applied to recover petroleum from a floating slick or spill or to control the oil leaks in boat marinas by absorbing continuously the residues that usually exist in the water surface.

## Claims

1. Open-cell and highly hydrophobic polyurethane foam specially for oil absorption comprising a polyurethane represented by the following general formula: 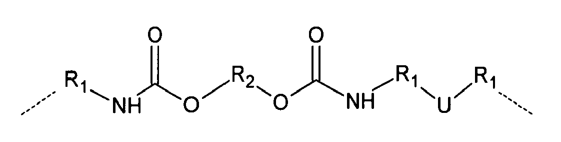 where
R₁ is the residue of an at least bifunctional isocyanate,
R₂ is the residue of a fatty acid polyester polyol represented by the following general formula: 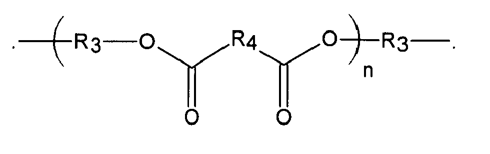 where
R₃ is the residue of an at least bifunctional alcohol,
R₄ is the residue of an at least bifunctional fatty acid,
n is an integer from 1 to 30, and
U is

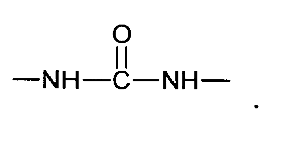

2. Open-cell and highly hydrophobic polyurethane foam specially for oil absorption prepared by mixing an at least bifunctional isocyanate, a fatty acid polyester polyol and water, and optionally a surfactant, a catalyst and a viscosity reducing agent.

3. Polyurethane foam according to claim 1 or 2, wherein the at least bifunctional isocyanate is selected from the group consisting of ethylene diisocyanate, tetramethylene-1,4- diisocyanate, hexamethylene-1,6-diisocyanate, dodecane-1,1 2-diisocyanate, cyclobutane-1,3-diisocyanate, cyclohexane-1,3- or -1,4-diisocyanate, 1-isocyanato-3,3,5-trimethyl-5-isocyanatomethylcyclohexane, hexahydrotolylene-2,4- or - 2,6-diisocyanate, hexahydrophenylene-1,3- or -1,4-diisocyanate, perhydrodiphenylmethane-2,4'- or 4,4'-diisocyanate, phenylene-1,3- or -1,4-diisocyanate, tolulene-2,4- or -2,6-diisocyanate, diphenylmethane-2,4- or -4,4'-diisocyanate (MDI) or polymeric forms of MDI, naphthylene-1,5-diisocyanate, triphenylmethane-4,4',4"-triisocyanate, polyphenyl- polymethylene polyisocyanate, m- or p-isocyanatophenyl sulphonyl isocyanate, perchlorinated aryl polyisocyanate, polyisocyanate containing carbodiimide groups, toluene-2,4- or - 2,6-diisocyanate, polyphenyl polymethylene polyisocyanate or isophorone diisocyanate.

4. Polyurethane foam according to anyone of the preceeding claims, wherein the fatty acid polyester polyol is prepared from an at least bifunctional fatty acid and an at least bifunctional alcohol.

5. Polyurethane foam according to claim 4, wherein the at least bifunctional fatty acid contains 12 to 54 carbon atoms.

6. Polyurethane foam according to claim 4 or 5, wherein the at least bifunctional fatty acid is a dimer or trimer fatty acid produced from tall oil or vegetable oil.

7. Polyurethane foam according to claim 6, wherein the vegetable oil is rapeseed oil.

8. Polyurethane foam according to claim 6 or 7, wherein the dimer or trimer fatty acid is saturated or unsaturated.

9. Polyurethane foam according to anyone of claims 4 to 8, wherein the at least bifunctional alcohol is selected from the group consisting of 1,2-ethanediol, 1,2-propanediol, 1,3-propanediol, 1,2-butanediol, 1,3-butanediol, 1,4-butanediol, 2,2-dimethyl-1,3-propanediol, 1,6-hexanediol, 2-methyl-2,4-pentanediol, 3-methyl-2,4-pentanediol, 2-ethyl-1,3-hexanediol, 2,2,4-trimethyl-1,3-pentanediol, diethylene glycol, triethylene glycol, polyethyleneglycols, dipropylene glycols, tripropylene glycols, polypropylene glycols, and 2,2-bis (4-hydroxycylohexyl) propane.

10. Polyurethane foam according to anyone of claims 2 to 9, wherein the surfactant is selected from the group consisting of an organosilicon surface active agent, a diethanolamide of fatty residue, a fatty alcohol ethoxylate or sorbitol mono esterified with a fatty acid with 8 to 28 carbon atoms.

11. Polyurethane foam according to claim 10, wherein the organosilicon surface active agent is selected from the group consisting of 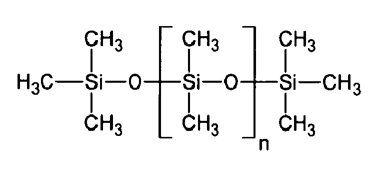 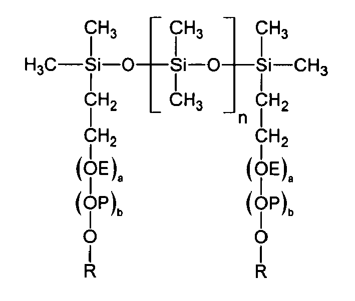 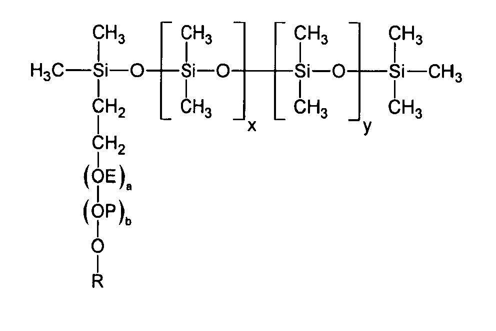 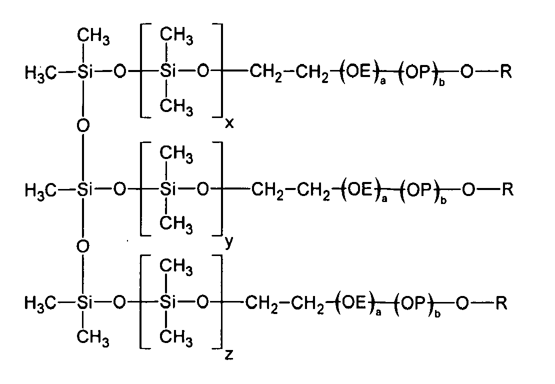 where
OE is a polyoxyethylene group
OP is a polyoxypropylene group
R means either a hydrogen atom or a methyl group

12. Polyurethane foam according to anyone of claims 2 to 11, wherein the catalyst is an organic catalyst or an organometallic catalyst or a mixture thereof.

13. Polyurethane foam according to claim 12, wherein the organic catalyst is selected from the group consisting of N,N-dimethylethanolamine (DMEA) ; N,N-dimethylcyclohexylamine (DMCHA); bis(N,N-dimethylaminoethyl)ether (BDMAEE); N,N,N',N',N"-pentamethyldiethylenetriamine (PMDETA); 1,4-diazabicyclo[2.2.2]octane (DABCO) (also referred to as triethylenediamine (TEDA)); 2-(2-dimethylaminoethoxy)-ethanol (DMAEE); 2-((2-dimethylaminoethoxy)-ethyl methyl-amino)-ethanol; 1-(bis(3-dimethylamino)-propyl)amino-2-propanol (also referred to as N"-hydroxypropyl-N,N,N',N'-tetramethyliminobispropylamine); N,N',N" tris(3-dimethylamino-propyl)-hexahydrotriazine; dimorpholinodiethylether (DMDEE); N,N-dimethylbenzylamine; N,N,N',N",N"-pentamethyldipropylenetriamine; and N,N'-diethylpiperazine, and the organometallic catalyst is selected from the group consisting of stannous octoate; dibutyltin dilaurate (DBTDL or DBTL); dibutyltin mercaptide; phenylmercuric propionate; lead octoate; potassium acetate/octoate (KA/KO); quarternary ammonium formates (QAF); and ferric acetylacetonate.

14. Polyurethane foam according to anyone of claims 2 to 13, wherein the viscosity reducing agent is a plasticizer selected from the group consisting of phthalate esters, adipate esters, epoxidised soyabean oil, fatty acid esters and dimerised fatty acid esters.

15. Polyurethane foam according to claim 14, wherein the phthalate ester is selected from the group consisting of dioctyl phthalate, diisobutyl phthalate, dinonyl phthalate, diisononylphthalate, didecyl phthalate and diisodecyl phthalate.

16. Polyurethane foam according to anyone of the preceeding claims, wherein the fatty acid polyester polyol has a molecular weight in the range of 500 to 6.000 g/mol.

17. Polyurethane foam according to anyone of the preceeding claims, wherein the open-cell content is at least 80%.

18. Polyurethane foam according to claim 17, wherein the open-cell content is at least 95%.

19. Polyurethane foam according claim 4, wherein the at least bifunctional fatty acid is in admixture with a short-chain C₁-C₁₁ dicarboxylic acid.

20. Polyurethane foam according claim 19, wherein the short-chain C₁-C₁₁ dicarboxylic acid is selected from the group consisting of oxalic acid, glutaric acid, malonic acid, adipic acid, succinic acid, suberic acid, sebacic acid, azelaic acid, dodecanedioic acid, pimelic acid, terephthalic acid, isophthalic acid, phthalic acid, naphthalene dicarboxylic acids, 1,4- or 1,3-cyclohexane dicarboxylic acids, 1,6- hexanedioic acid (adipic acid), 1,7-heptanedioic acid (pimelic acid), 1,8- octanedioic acid (suberic acid), 1,9-nonanedioic acid (azelaic acid), and 1,10-decanedioic acid (sebacic acid).

21. Process for making a polyurethane foam according to anyone of the preceeding claims comprising the steps of:
a) mixing an at least bifunctional isocyanate, a fatty acid polyester polyol and water, and optionally a surfactant, a catalyst and a viscosity reducing agent, as defined in anyone of the preceeding claims,
b) curing the resulting polyurethane foam, and
c) crushing the cured polyurethane foam.

22. Process according to claim 21, wherein mixing step a) comprehends 2 stages:
i) mixing a fatty acid polyester polyol and water, and optionally a surfactant, a catalyst and a viscosity reducing agent, as defined in anyone of the preceeding claims, and then
ii) mixing an at least bifunctional isocyanate as defined in anyone of the preceeding claims to the mixture obtained in stage i).

23. Process according to claim 22, wherein in the second stage ii) mixing lasts no longer than 60 s.

24. Process according to claim 23, wherein in the second stage ii) mixing lasts no longer than 30 s.

25. The process according to anyone of claim 21 to 24, wherein the product resulting from mixing is for foam forming poured into a mould of a size allowing free expansion of the foam.

26. Process according to anyone of claims 21 to 25, wherein crushing of the cured polyurethane foam in step c) is performed not less than 24 hours after starting curing of the polyurethane foam.

27. The process according to anyone of claims 21 to 26, wherein the crushing of the cured polyurethane foam in step c) is performed in a polyurethane foam crusher.
